# EUROPEAN PATENT APPLICATION

(11) **EP 3 028 839 A1**
(43) Date of publication of application: **08.06.2016**
(21) Application number: 14195590.6
(22) Date of filing: 01.12.2014
(51) Int. Cl.: B29C 67/00, B22F 3/105

(54) **A method for manufacturing an object by laser sintering and a laser sintering device for manufacturing the object**

(71) Applicant: Siemens Aktiengesellschaft, 80333 München (DE)
(72) Inventor: Eriksson, Jonas, 61294 Finspong (SE); Simmons, Ulf, SE60370 Norrkoping (SE)

(57) **Abstract**

A method and a laser sintering device for manufacturing an object are disclosed. Initially, an article (13) is laser sintered, and the article (13) comprises an object component (19) and a tool component (20), whereby the object component (19) and the tool component (20) are jointly laser sintered. The tool component (20) is laser sintered in a way such that the tool component (20) is adapted for post machining the object component (19). Thereafter, the object component (19) is post machined using the tool component (20), wherewith the object is obtained.

## Description

The present invention relates to the field of laser sintering, and particularly to a method for manufacturing an object by the process of laser sintering. The present invention also relates to a laser sintering device for manufacturing the aforementioned object.

Laser sintering is a popular additive manufacturing process that is used to manufacture 3D articles in a layered manner from powdered material, and the manufactured articles can be either composed of a metallic or a nonmetallic material. Three-dimensional (3D) articles having extremely complicated profiles and contours, such as turbomachine components, aircraft components, commercial household articles, and other mechanical components, are capable of being manufactured using laser sintering techniques in an extremely controlled and a precise layered manner. Laser sintering techniques are also widely used in the field of rapid prototyping for large scale manufacturing of 3D articles in a time-efficient manner.

During the process of manufacturing an article by laser sintering, the powdered material, which is constitutive of the desired 3-D article, is fed layer after layer (each layer is of a certain thickness, for example, 20µm) from a powder feeder unit to a platform of a laser sintering device. Based on a 3D profile of the article being manufactured, especially a 2-D cross-sectional profile that corresponds to that particular layer of the article, the corresponding particles of the powdered material which constitute that particular layer are selectively sintered using a high power laser beam, until these particles are molten. The molten particles adhere to each other, and thereby a certain layer of the article is manufactured. Thereafter, the platform is lowered by a magnitude, wherein the magnitude usually corresponds to a thickness of a chosen layer of the powdered material (for example, 20µm), and the aforementioned laser sintering process steps are repeated for manufacturing a next layer of the article, which typically corresponds to an immediate upper layer of the article. The aforementioned process steps are thereafter repeated for manufacturing other subsequent top layers of the article, thereby resulting in the overall manufacture of the article.

The manufactured article is subsequently machined by a machining tool based on a predefined object profile, in order to obtain an object of a desired profile from the manufactured article. This is usually termed as 'post-machining' of the article. The predefined object profile defines an external profile of the object, which is usually defined as one or more parameters, viz. a degree of surface smoothness (Rₐ) of the object, presence of one or more bores on the article, an angle of inclination of a certain surface of the object, presence of a channel of a certain surface roughness, et cetera. The manufactured article is machined based on the aforementioned parameters of the predefined object profile, in order to obtain the final object (also termed as 'intended object'), and the machining is typically performed by a machining tool. The different machining operations can therein include milling, grinding, drilling, et cetera. The aforementioned machining operations are usually performed either by conventional tooling using conventional tools, or by numerically controlled machining techniques using numerically controlled machine tools, et cetera.

Sometimes the object comprises extremely complicated and extremely intricate physical features (for example, surface features), which is typically defined and planned based on an end application of the object, and the process of machining the article in accordance with the corresponding predefined object profile in order to obtain such an object comprising the aforementioned complicated and intricate features can be an extremely daunting and a cumbersome task. The complexity of the object can be attributed to the aforementioned stringent requirements of specific shapes, specific features, et cetera, which usually arises out of the end use/purpose for such high-end objects in certain sophisticated applications. Certain examples of such objects include turbomachine components or miniaturized medical components, wherein such components can comprise cooling bores of very fine diameters (∼ 100 µm), or specific regions of inner surfaces of the components that require a very high degree of surface smoothness (for example an Rₐ value of 0.8), or a channel of a certain surface roughness, et cetera.

Presently, for obtaining such complicated objects from the laser sintered articles, very expensive, extremely complicated and extremely high-end customized machining tools are used during post machining of the article. Herewith, the manufacturing cost of the object increases tremendously, merely because of the use of such expensive machining tools required therein, i.e. expensive machining tools used for providing such complicated features in the final object. Additionally, the efficiency and accuracy of post machining the article therein depends on the sturdiness and rigidity of the machining tools, and the support structures and guidance members provided therein. On certain occasions, it is also desired to have certain special type of support member(s) and/or guidance member(s) such as pillow blocks for respectively supporting and/or guiding the machining tool for facilitating the obtainment of a certain shape and/or a certain feature on the article for obtaining the object. Presently, these special types of support members and/or guiding members are to be separately fitted to the machining tool for machining the object, in order to enable the obtainment of the specific shape and/or feature in the article during the machining of the article, and the same can be an extremely challenging task.

In addition to the aforementioned problems, in certain circumstances, the lack of availability of such complex and high-end machining tools and/or exigent improvisational requirements of different machining tools (i.e. the separate support structure(s) and/or the guidance member(s)), which can arise based on the changing manufacturing needs for the object, can also stymie the manufacturing of the object, thereby increasing the manufacturing time required for manufacturing the object, and consequently increasing the delay in materialization of the object that is required for the end application/use.

Therefore, the presently available manufacturing techniques for manufacturing a complex object from a laser sintered article pose the aforementioned limitations - such as high equipment cost, high manufacturing cost, and high manufacturing time - and possess multiple drawbacks. The present invention aims to provide an ingenious solution for reducing the aforementioned limitations and disadvantages posed by the presently available techniques.

The objectives of the present invention is to propose a simpler, cost-effective, highly accurate, easily controllable, and an easily customizable manufacturing solution for manufacturing objects, and also to propose a laser sintering device for manufacturing the objects. Furthermore, the objective of the invention is also to reduce the post machining efforts required for obtaining the object from an article manufactured by laser sintering.

The aforementioned objective is achieved by a method for manufacturing an object in accordance with claim 1, and a laser sintering device for manufacturing the object in accordance with claim 11.

The underlying objective of the present invention is to propose a simpler, a cost effective, a time efficient, and an accurate technique for manufacturing an object. The manufacturing of the object commences with laser sintering an article that comprises two components, viz. an object component and a tool component. In the present invention, the object component and the tool component are laser sintered together, and the object component and the tool component jointly constitute the article that is obtained by laser sintering. The object component comprises a desired object, and the tool component comprises a tooling means for machining the object component for the purpose of obtaining the object from the object component. Herein, the tool component is adapted to machine the object component, i.e. the tool component is shaped or profiled suitably to perform post machining of the object component. Thereafter, the object component is machined by the tool component, for example, based on a predefined object profile. Therewith, the object is obtained from the object component by the post machining, which is performed by the tool component on the object component.

Since the tool component is laser sintered along with the object component, it is possible to increase the accuracy of machining the object component, because different surface features of the tool component can be precisely designed, customized, and specified based on different surface features of the object. Furthermore, it is possible to place or orient the tool component in the vicinity of specific locations of the object component, i.e. those locations of the object component, which are required to be post machined for obtaining the object. Since it is possible to manufacture extremely complicated and intricate object features using laser sintering, it is also possible to specifically design, customize and manufacture intricate and complex tool components that are required for machining the object component for obtaining the object. This advantageously increases the accuracy of the manufactured object, and also obviates the need for external machining tools for machining the object component, thereby leading to both reduced manufacturing cost and manufacturing time for the object.

In accordance with an embodiment of the present invention, the object component and the tool component are laser sintered in a single laser sintering process. The laser sintering process commences with the sintering of an initial powdered layer/base layer for the aforementioned article for the purpose of obtaining an initial sintered layer/base layer of the article, and the laser sintering process concludes with the sintering of a final powdered layer for the article for the purpose of obtaining a final sintered layer of the article. The final sintered layer is a topmost sintered layer of the article. The different sintered layers, the initial sintered layer, the final sintered layer, and intermediate layers located there between, comprise sintered layers which correspond to both the object component and the tool component. Since the object component and the tool component are manufactured in the same laser sintering process, the time required for designing the article, which comprises the object component and the tool component, and for manufacturing thereof are reduced, as compared to the object component and the tool component individually manufactured by laser sintering in individually different laser sintering processes.

In accordance with another embodiment of the present invention, the object component and the tool component are laser sintered together on a same target platform. The target platform is that entity of a laser sintering device whereon the powdered material is deposited and the same is laser sintered by a laser beam in accordance with a certain object profile. By having the same and a common target platform for sintering both the object component and the tool component, it is possible to laser sinter the object component and the tool component on a single, and a common target platform, thereby obviating the need for multiple target platforms. Advantageously, equipment costs for laser sintering the object component and the tool component can be further reduced. Furthermore, since laser sintering involves very minute lowering of the target platform (in the order of tens of microns) after the sintering of each layer of the manufactured component, it is simpler to lower both the object component and the target component together, and also control the accuracy of movement of the target platform, if a single target platform is used, as compared to controlled and precise lowering of multiple target platforms, thereby obviating movement-related errors.
In accordance with yet another embodiment of the present invention, an object face is provided for the object component, and a tool face is provided to the tool component. The object face and the tool face are provided such that the object face and the tool face are of complementary shapes. The tool face is that portion of the tool component that is used for machining the object component, especially for machining the object component at its object face. The tool face comprises certain portions of the tool component that are beneficial for machining certain portions of the object face that is comprised in the object component. Additionally, the object face and the tool face can also oppose one another, thereby enabling the direct contact of the tool face with the object face during the machining of the object. The object face is profiled in accordance with a predefined object profile for obtaining object features from the object face.

Herein, the complementary shapes of the object component and the tool component are beneficial for enhancing the compactness of the article which comprises the tool component and the object component. Advantageously, the accuracy of machining can be increased, and the mechanical effort required for machining the object face can be further decreased, if the tool face is complementary to the object face. For example, if a very fine bore of 0.2 mm diameter needs to be realised in a recess of the object component, then the object face can be sintered in the form of a recess of 0.25 mm diameter, the tool face can be sintered in the form of a drill bit of 0.2 mm diameter, and the drill bit can be sintered such that the drill bit is arranged inside the recess for enabling the drilling a bore at a desired location for the purpose of providing the bore at the desired location on the object face. Thus, the need for providing an external drill bit and drilling means can be obviated firstly if the object component and the tool component are jointly laser sintered, secondly if the object face and the tool face are sintered such that the same are of complementary shapes, and thirdly such that the object face is adapted for the purpose of accommodating the tool face for machining the object face by the tool face for realising one or more features on the object component.

In accordance with yet another embodiment of the present invention, the object face and the tool face physically contact each other. Thus, upon commencement of machining the object face by the tool face, it is possible to either start the machining of the object face precisely from that point where the tool face contacts the object face. Alternatively, a region of contact, i.e. a region where the object face contacts the tool face, can also be used to support/guide the tool component during the machining of the object face by the tool face, especially in cases where a different portion of the tool component is used for post machining the object component. Since the object face and the tool face are jointly laser sintered, it is possible to precisely specify and customize the tool face, the placement of the tool face on the object face, the regions(s) of contact there between, and the dimensions thereof, thereby further enhancing the accuracy and ease of machining the object component by the tool component for obtaining the object from the object component.

In accordance with certain other embodiments of the present invention, the tool component is laser sintered based on a predefined object profile. The predefined object profile can be created by using 3D modeling and design techniques, such as Computer Aided Design techniques and packages thereof such as AutoCAD, SolidWorks, et cetera. The predefined object profile is then analysed and one or more object features is determined for the object component, and the object features can include surfaces of the object, location of bore(s) in the object, et cetera. The one or more object features define those features based on which the object component needs to be machined by the tool component for manufacturing the object from the object component. Thereafter, a 3D profile for the tool component is determined based on the one or more object features determined therein, for example using stereolithography software. According to another embodiment, the profile for the tool component can also be determined by selecting a tool profile from a plurality of tool profiles that closely matches with the desired profile of the tool component.

Advantageously, the freedom provided to a user/designer to directly design and/or choose the tool component grossly based on the object component, is increased. Thus, it is possible to increase the accuracy and the ease of customization of the tool component based on the one or more object features, and therewith increase the accuracy and controllability of manufacturing the object. Thus, even extremely complicated and precise machining tools, and processes can be realised by providing the provision to create and customize the tool components based on the object features.

In accordance with yet another embodiment of the present invention, a guidance member is provided for the tool component for guiding the tool component during machining the object component. In a further embodiment, the guidance member is integral to the tool component. Since the tool component is customizable, by providing the guidance member to the tool component, especially by laser sintering the guidance member along with the tool component, it is possible to provide easy and customized guiding means for guiding the tool component during the machining of the object component, thereby obviating the need for external guiding structures to be provided for machining the object component. By integrating the guidance member along with the tool component, it is possible to increase the strength and reliability of the tool component as a whole, as compared to a separate guidance member either attached to the tool component or placed along with the tool component during the post machining of the object component.

In accordance with yet another embodiment of the present invention, a support member is provided for the tool component for supporting the tool component during machining the object component. In a further embodiment, the support member is integral to the tool component. Since the tool component is customizable, by providing a support member to the tool component, especially by laser sintering the support member along with the tool component, it is possible to provide easy and customized supporting means for supporting the tool component during the machining of the object component, thereby obviating the need for external supporting structures to be provided during machining the object component. The support structures increase the accuracy of machining the object component, because the weight of the tool component is now borne by the support member. By integrating the support member along with the tool component, it is possible to increase the strength and reliability of the tool component as a whole, as compared to a separate support member either attached to the tool component or placed along with the tool component during the post machining of the object component.
In accordance with yet another embodiment of the present invention, a portion of the tool component is adapted for connecting a power source to the tool component. Thus, it is possible to directly connect a power source to the tool component, thereby providing the necessary energy for machining the object component. The power source provides the necessary mechanical energy and/or mechanical torque to the tool component for performing different machining operations by the tool component on the object component, such as drilling, milling, grinding, et cetera, based on the type of the tool component sintered therein.

A laser sintering device for performing the method of manufacturing the object according to any of the aforementioned embodiments is also disclosed herein.

The aforementioned and other embodiments of the present invention related to a method for manufacturing an object by laser sintering and a laser sintering device for manufacturing the object will now be addressed with reference to the accompanying drawings of the present invention. The illustrated embodiments are intended to illustrate, but not to limit the invention. The accompanying drawings herewith contain the following FIGs, in which like numbers refer to like parts, throughout the description and drawings.

The FIGs illustrate in a schematic manner further examples of the embodiments of the invention, in which:
- FIG 1: depicts a schematic of an exemplary laser sintering device for manufacturing an article according to one or more embodiments of the present invention,
- FIG 2a-2c: depict front views of three different configurations of object components and tool components comprised in the article referred to in FIG 1,
- FIG 3a: depicts a front view of an embodiment of an object intended to be obtained from the article referred to in FIG 1,
- FIG 3b: depicts a front view of an embodiment of an object component and a tool component for obtaining the object referred to in FIG 3a,
- FIG 3c: depicts a front view of the object component undergoing machining by the tool component referred to in FIG 3b,
- FIG 4a: depicts a front view of another embodiment of another object intended to be obtained from the article referred to in FIG 1,
- FIG 4b: depicts a front view of another embodiment of another object component and another tool component for obtaining the object referred to in FIG 4a,
- FIG 5a: depicts a front view of yet another embodiment of yet another object intended to be obtained from the article referred to in FIG 1,
- FIG 5b: depicts a front view of yet another embodiment of yet another object component and yet another tool component for obtaining the object referred to in FIG 5a,
- FIG 6: depicts an exemplary method for manufacturing an object according to one or more embodiments of the present invention,
- FIG 7: depicts sub-steps of step 170 of the method referred to in FIG 6, and
- FIG 8: depicts sub-steps of step 190 of the method referred to in FIG 6.

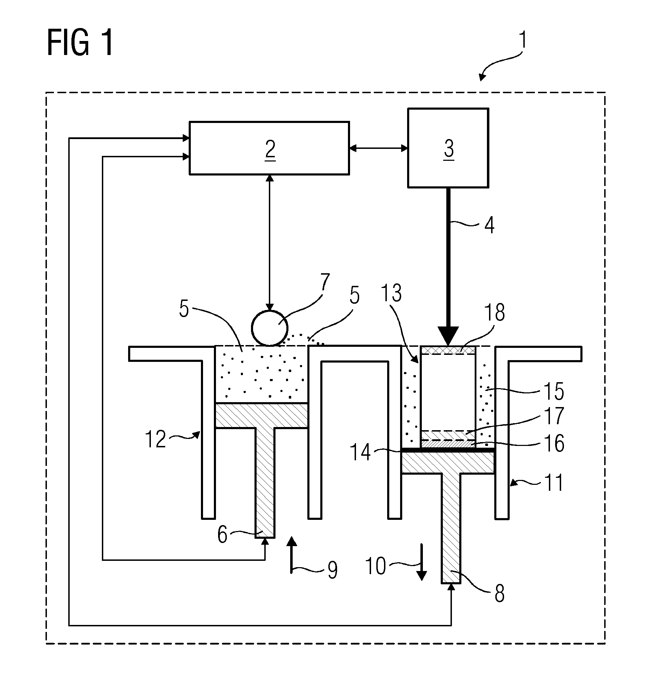

A schematic of an exemplary laser sintering device 1 for manufacturing an exemplary article 13 in accordance with one or more embodiments of the present invention is depicted in FIG 1.

The laser sintering device 1 of FIG 1 comprises a laser unit 3 for generating a laser beam 4, a laser sintering controller 2 for controlling one or more beam parameters of the laser beam 4, a target platform 14 whereon the article 13 is manufactured by laser sintering in a layered manner, a powder chamber 12 for storing powdered material 5, a powder delivery piston 6 for raising a column of the powdered material 5 in the powder chamber 12, a roller 7 for disposing a layer of the powdered material 5 on the target platform 14 that is located in a fabrication chamber 11, and a fabrication piston 8 for lowering the target platform 14 in a controlled manner during the process of laser sintering the article 13.

Herein, the laser sintering controller 2 is operably connected to the powder delivery piston 6, the fabrication piston 8, the roller 7, and the laser unit 3. The laser sintering controller 2 can be for example a Programmable Logic Controller (PLC), a Field Programmable Gate Device (FPGA), a general purpose computer, et cetera. During the process of manufacturing the article 13, the laser sintering controller 2 facilitates the performance of the following sequential operations: to move the powder delivery piston 6 upwards (direction of upward movement is indicated by an arrow 9) inside the powder chamber 12 by a magnitude equivalent to a desired thickness of a layer of the article 13 being manufactured (for example, the desired thickness of the layer of the article 13 can be 20µm), to move the roller 7 in a direction from the powder chamber 12 towards the fabrication chamber 11 for disposing a layer (not depicted) of the powdered material 5 from the powder delivery piston 6 to the target platform 14 located on the fabrication piston 8, to enable the generation of the laser beam 4 by the laser unit 3, to direct the laser beam 4 towards the aforementioned layer of the powdered material 5 located on the target platform 14, to sinter the layer of the powdered material 5 disposed for obtaining a first sintered layer 16 of the article 13, to move the fabrication piston 8 downwards (direction of downward movement is indicated by an arrow 10) inside the fabrication chamber 11 by a magnitude equivalent to a thickness of the first sintered layer 16 of the article 13, and to repeat the aforementioned sequential operations to sinter another layer (not depicted) of powdered material 5 disposed on top of the first sintered layer 16 in order to obtain a second sintered layer 17.

It may be noted herein that the second sintered layer 17 of the article 13 is arranged on top of the first sintered layer 16 as viewed in an opposing direction of the laser beam 4. The fabrication piston 8 is again moved downwards inside the fabrication chamber 11, and the hereinabove mentioned sequential operations related to laser sintering are thereafter repeated for obtaining subsequent upper sintered layers of the article 13. Herein, the laser sintering process is stopped after the obtainment of a topmost sintered layer 18 of the article 13. Herein, the 'laser sintering processes' commences with the obtainment of the first sintered layer 16 of the article 13 and concludes with the obtainment of the topmost sintered layer 18 of the article 13.

In the present invention, the laser sintering controller 2 is further configured to control one or more beam parameters of the laser beam 4 generated therein. The different beam parameters of the laser beam 4 generated by the laser unit 3 are user defined parameters and the beam parameters can include a power of the laser beam 4, a pulse duration of the laser beam 4, an angle of incidence of the laser beam 4, type of laser beam 4 (gas based, chemical based, dye based, et cetera), a wavelength of the laser beam 4, a pattern of movement of the laser beam 4 during the laser sintering process, et cetera. Herein, the thickness of the layer of the powdered material 5 disposed on the target platform 14, and the aforementioned beam parameters are exemplarily chosen based on desired properties of the article 13 (for example, the desired material strength of the article 13), technical specifications and technical constraints of the laser sintering device 1, desired thickness of the sintered layers 16-18 of the manufactured article 13, et cetera. The laser sintering device 1 can be configured accordingly based on the beam parameters of the laser beam 4 and the desired thickness of the sintered layers 16-18 of the article 13 for the purpose of manufacturing the article 13, i.e. the laser unit 3 is configurable to generate the laser beam 4 possessing certain characteristics based on the aforementioned requirements.

After the completion of the laser sintering process, i.e. after the topmost sintered layer 18 of the article 13 is obtained, the article 13 is preferably separated from the platform for the purpose of further machining of the article. Herein, unsintered powder 15 that is located in the fabrication chamber 11, especially on the sides of the manufactured article 13, can be transferred from the fabrication chamber 11 to the powder chamber 12, and the unsintered powder 15 can be used for subsequent laser sintering operations.

According to the present invention, the manufactured article 13 comprises two distinct components, viz. an object component and a tool component (not depicted in FIG 1). The manufactured article is such that the object component is directly machinable by the tool component for the purpose of obtaining a desired object (not depicted in FIG 1) from the object component. It may be noted that the article 13, which includes both the object component and the tool component is manufactured in a single laser sintering process, and the entire article 13 is also manufactured on the same target platform 14. I.e., in the present invention, the object component and the tool component are not manufactured in different laser sintering processes and also not on different target platforms or later integrated to form the manufactured article 13.

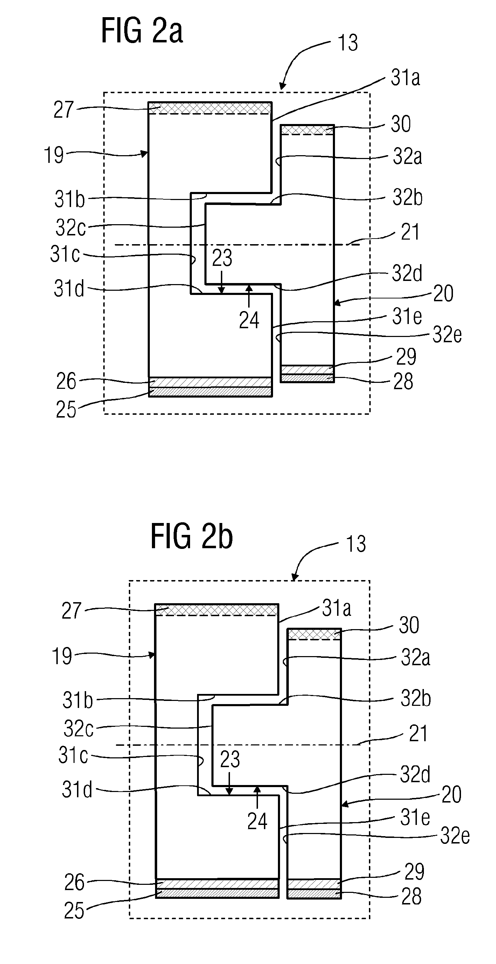

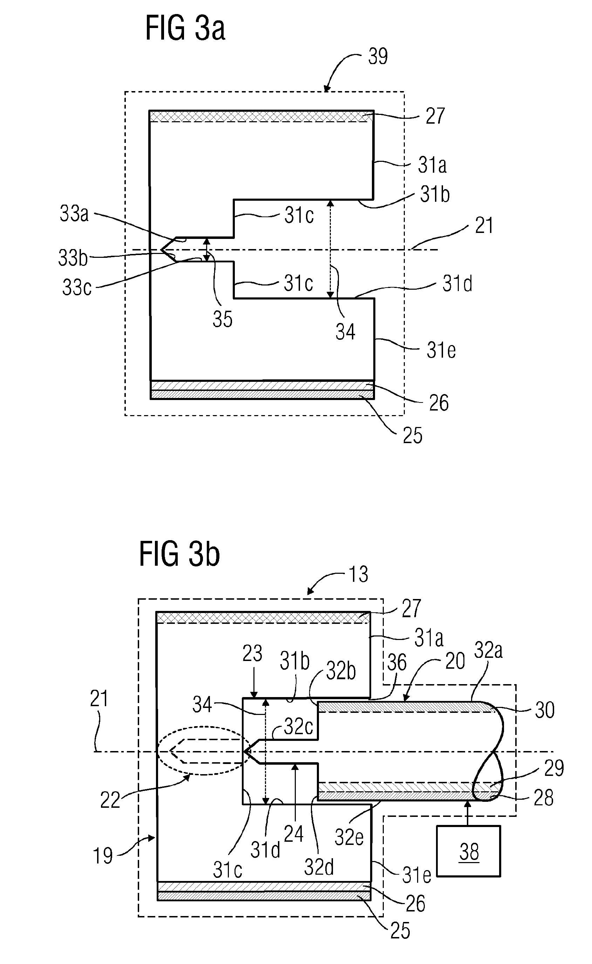

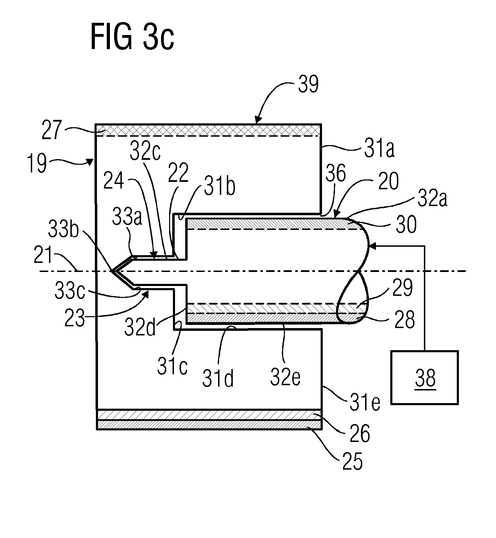

Different embodiments of object components 19 and tool components 20 are depicted and elucidated with reference to FIGs 2a-2c, FIGs 3b-3c, FIG 4b, and FIG 5b. Different embodiments of the desired object 39 which are to be respectively obtained by machining the respective object components 19 (by means of the respective tool components 20) are depicted and elucidated with reference to FIG 3a, FIG 4a, and FIG 5a.

Furthermore, it may be noted herein that each of the sintered layers 16-18 of the article 13 can either correspond to only an entire layer of the object component 19 or only to an entire layer of the tool component 20 or to entire layers of the object component 19 and the tool component 20, and the same depends on the profile of the article 13. For example, if the laser sintering of the article 13 commences with manufacturing a certain portion of the object component 19, then the first sintered layer 16 of the article 13 comprises only an entire layer of the object component 19. Similarly, if the laser sintering of the article 13 concludes with manufacturing a certain portion of the tool component 20, then the topmost sintered layer 18 of the article 13 comprises only an entire layer of the tool component 20. Furthermore, if the second layer 17 of the article 13 comprises both a certain portion of the object component 19 and a certain portion of the tool component 20, then the second layer 17 of the article 13 comprises an entire layer that comprises both the object component 19 and the tool component 20. Furthermore, it is also possible that any of the sintered layers 16-18 can comprise portion(s) of the object component 19 and portion(s) of the tool component 20, and it depends on the profile of the article 13.

FIGs 2a-2c depict front views of different exemplary configurations of the article 13 (the article 13 comprises the aforementioned object component 19 and the aforementioned tool component 20) manufactured by the laser sintering device 1 referred to in FIG 1. Cross-reference is also made to FIG 1 for the purpose of elucidation of FIGs 2a-2c.

The article 13 depicted in each of the FIGS 2a-2c essentially comprises two distinct parts, viz. an object component 19 and a tool component 20. The object component 19 and the tool component 20 laterally extend along an axis 21 of the article 13. The axis 21 depicted therein is a transverse axis of the article 13, and the transverse axis 21 is construed to be perpendicular to a normal of a certain surface of the target platform 14 whereon the article 13 is laser sintered.

Herein, the object component 19 is construed to be a part of the article 13 that comprises a desired object (not depicted in FIGs 2a-2c) that is required to be manufactured by the laser sintering device 1. The object component 19 comprises different machinable portions 31a-31e which can be machined, i.e. the machinable portions 31a-31e are capable of being machined by machining techniques such as milling, grinding, drilling, et cetera, for the purpose of shaping/profiling the machinable portions 31a-31e, such that the desired object is obtained from the object component 19 after machining the object component 19. These machinable portions 31a-31e of the object component 19 can comprise both inner portions and outer portions of the object component 19. Furthermore, the machinable portions 31a-31e of the object component 19 can be sintered grossly based on surface profiles and features of the desired object. These machinable portions 31a-31e are machined for obtaining different surface profiles and features that are purported to be present in the desired object.

Herein, the tool component 20 is construed to be a part of the article 13 that comprises a machining tool that is usable for post machining the object component 19 based on a predefined object profile for the purpose of obtaining the desired object from the object component 19. The tool component 20 comprises different machining portions 32a-32e which can be used for machining the corresponding machinable portions 31a-31e of the object component 19.
The aforementioned different machining portions 32a-32e of the tool component 20 are profiled and shaped in the form of customized machining tools during the laser sintering process itself for the purpose of providing machining means for machining the corresponding machinable portions 31a-31e of the object component 19.

Herein, the shapes and profiles of the object component 19 and the tool component 20 are based on the predefined object profile which can be created by a user using commercially available 3D modeling tools such as AutoCAD, SolidWorks, CATIA, et cetera, based on the type of a desired object (which depends on an end use/application of the object) that is required to be obtained from the object component 19 (which is obtained by the laser sintering process) by machining the object component 19 by the tool component 20.

In accordance with an embodiment of the article 13 depicted in FIG 2a, the manufacturing of the article 13 commences with manufacturing of the object component 19. Herein, base layers 25,26 of the object component 19 are laser sintered prior to base layers 28,29 of the tool component 20. Therefore, the base layers 25,26 of the object component 19 are to be construed as the respective first and second sintered layers 16,17 of the article 13, and the base layers 28,29 of the tool component 20 are to be construed as certain intermediate sintered layers of the article 13. Furthermore, in the present embodiment, the manufacturing of the article 13 concludes with manufacturing of a final layer 27 of the object component 19. The final layer 27 of the object component 19 is however laser sintered after laser sintering a final layer 30 of the tool component 20. Therefore, the final layer 30 of the object component 19 is to be construed as the topmost layer 18 of the article 13, and the final layer 30 of the tool component 20 is to be construed as another intermediate sintered layer of the article 13.

In accordance with another embodiment of the article 13 depicted in FIG 2b, the manufacturing of the article 13 commences with simultaneous manufacturing of the object component 19 as well as the tool component 20. Herein, base layers 25,26 of the object component 19 and base layers 28,29 of the tool component 20 are simultaneously laser sintered. Therefore, the base layers 25,26 of the object component 19 and the corresponding base layers 28,29 of the tool component 20 jointly constitute the respective first and second sintered layers 16,17 of the article 13. Furthermore, in the present embodiment, the manufacturing of the article 13 concludes with manufacturing of a final layer 27 of the object component 19. The final layer 27 of the object component 19 is however laser sintered after laser sintering a final layer 30 of the tool component 20. Therefore, the final layer 27 of the object component 19 is to be construed as the topmost layer 18 of the article 13, and the final layer 30 of the tool component 20 is to be construed as yet another intermediate sintered layer of the article 13.

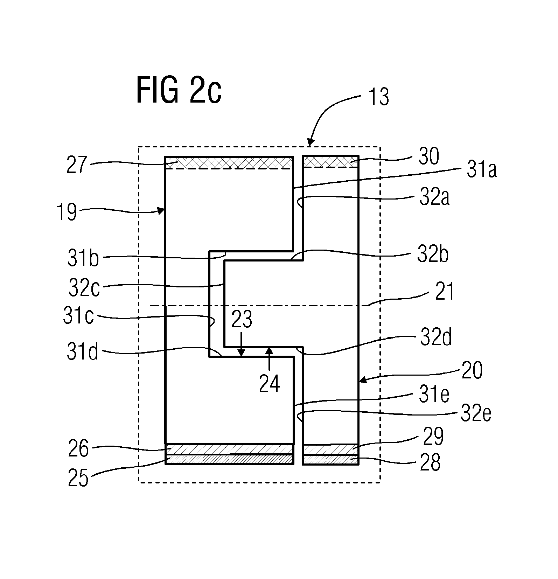

In accordance with yet another embodiment of the article 13 depicted in FIG 2c, the manufacturing of the article 13 commences with manufacturing of the object component 19 as well as the tool component 20. Herein, base layers 25,26 of the object component 19 and base layers 28,29 of the tool component 20 are simultaneously laser sintered. Therefore, the base layers 25,26 of the object component 19 and the corresponding base layers 28,29 of the tool component 20 jointly constitute the respective first and second sintered layers 16,17 of the article 13. Furthermore, in the present embodiment, the manufacturing of the article 13 concludes with manufacturing of a final layer 27 of the object component 19 as well as a final layer 30 of the tool component 20. The final layer 27 of the object component 19 and the final layer 30 of the tool component 20 are simultaneously laser sintered. Therefore, the final layer 27 of the object component 19 and the final layer 30 of the tool component 20 jointly constitute the topmost layer 18 of the article 13.

The constitution of the different layers of the article 13, i.e. whether a certain layer of the article 13 belongs only to the object component 19, or only to the tool component 20, or to both the object component 19 and the tool component 20, depends on the shape(s), dimension(s), and orientation(s) of the object component 19 and the tool component 20.

For the purpose of facilitation of the machining of the object component 19 and the tool component 20, the object component 19 is provided with an object face 23, and the tool component 20 is provided with a tool face 24. The tool face 24 comprises those machining surfaces 32a-32e of the tool component which are required for machining the machinable surfaces 31a-31e of the object component 19. The tool face 24 is used for post machining the object component 19, especially for machining the object face 23 of the object component 19. The tool face 24 is construable as a machining portion of the tool component 20, and the object face 23 is construable as a machinable portion of the object component 19. According to the teachings of the present invention, it may be noted herein that a desired object is however obtained by means of machining the object component 19 by the tool component 20, i.e. by machining the object face 23 by the tool face 24, in accordance with the predefined object profile created by a user.
It may be noted herein from the articles depicted in FIG 2a-2c that the tool faces 24 and the object faces 23 oppose each other. Thus, it is beneficial for exertion of appropriate machining forces (which are encountered during milling, grinding, drilling operations, et cetera) by the tool component 20 on to the object component 19 during the machining of the object component 19 by the tool component 20. The tool faces 24 and the object faces 23 oppose each other either in a longitudinal orientation or a transverse orientation or a diagonal orientation, and the same depends on the type of the desired object and the features thereof that is required to be obtained from the object component 19 by post machining of the object component 19 by the tool component 20.

Herein, for the purpose of increasing the effectiveness and accuracy of machining, it is preferred that the tool face 24 be of a complementary shape as compared to a profile of the object component 19, especially the object face 23. It is also preferred that the object face 23 be laser sintered such that the object face 23 and the tool face 24 contact one another when the article 13 is manufactured by the laser sintering process. Thus, it enables the machining of the article 13 directly at those contact points where the object face 23 and the tool face 24 contact one another, i.e. at those machining portions 32a-32e that contact the corresponding machinable portions 31a-31e.

It may be noted herein that inner portions and outer portions of the object face 23 undergo machining during the post machining of the object component 19 by the tool component 20. Furthermore, different physical features can be provided on the inner and outer portions of the object face 23, in order to obtain the desired object. Therefore, different regions of the tool face 24 are customized into the machining portions 32a-32e by appropriately laser sintering the tool face 24, and the same depends on the final machining that is required to be performed on the object face 23.

Furthermore, for the purpose of post machining the object face 23, a power source (not depicted in FIG 2a-2c) is connectable to the tool component 20 for energizing the tool component 20, wherewith an appropriate machining tool is realisable for machining the object face 23 of the object component 19 using the tool face 24 of the tool component 20. The tool component 20 is now capable of being energized and the same is now capable of machining the object component 19, and execute operations purporting to an appropriate machining tool, based on the type of features that is required to be provided on to the object face 23. Herein, the tool component 20 can be energized to perform one or more of the following exemplary machining operations:
- a reaming operation, if a bore is to be provided in the object face 23,
- a pounding operation, if a depression or a recess is to be provided in the object face 23,
- a grinding operation, if a certain surface of the object component 19 is to be ground to obtain a certain surface roughness, et cetera.

Different exemplary configurations of the articles 13, the corresponding object components 19, the tool components 20, the tool faces 24, the object faces 23, objects 39 obtained therefrom, are depicted in FIGs 3a-3c, FIGs 4a-4b, and FIGS 5a-5b. Cross-references are also made there between and also to FIG 1, FIG 2a-2c, for the purpose of elucidation of FIGs 3a-3c, FIGs 4a-4b, and FIGS 5a-5b.

Reference is herein made to the embodiment of an intended object 39 depicted in FIG 3a. Herein, the intended object 39 can be a stator ring of a turbomachine, wherein the stator ring 39 comprises front faces, a channel 34 disposed there between, and a cooling bore 35 in the channel 34. The intended object component 39 can be a portion of a turbomachine component such as an airfoil, a turbine heat shield, et cetera.

The below paragraphs elucidate the manner in which the object 39 of FIG 3a can be obtained by laser sintering an article 13 comprising appropriately an appropriate object component 19 and an appropriate tool component 20, which in turn comprises respectively an appropriate object face 23 and an appropriate tool face 24.

Reference is herein made to the exemplary article 13 as depicted in FIG 3b, which is laser sintered based on the aforementioned techniques, which comprises such the object component 19 and the tool component 20 for obtaining the object 39 (stator ring) depicted in FIG 3a.

The object component is laser sintered such that the first front face, the second front face, and the channel 34 there between are obtained. The first front face comprises the machinable portions 31a, 31b. The second front face comprises the machinable portions 31d, 31e. The channel 34 comprises the machinable portions 31b, 31c, 31d. According to the present example, the machinable portion 31c representing the channel 34 can be construed to be the object face 23 of the object component 19, because the cooling bore 35 is to be provided in a region 22 comprised in the machinable portion 31c of the channel 34. The cooling bore 35 is defined and enclosed by inner surfaces 33a-33c.
The tool component 20 is also laser sintered in the same laser sintering process, wherein the tool component 20 comprises a drilling head 32c and a shaft physically connected thereto. The drilling head and machinable portions 32b,32d of the shaft constitute the tool face 24 comprised in the tool component 20. The shaft comprises the machining portions 32a, 32b, 32d, 32e. The drilling head comprises the machining portion 32c. The drilling head 32c is laser sintered such that the drilling head 32c is preferably in contact with the region 22 that is required to be drilled for obtaining the cooling bore 35 in the channel 34. In the present example, the drilling head 32c can be construed to be the tool face 24 of the tool component 20, because the obtainment of the cooling bore 35 is facilitated by the drilling head 32c.

The machinable portions 32a,32b,32d,32e of the shaft are dimensioned and profiled such that the shaft is arrangeable inside the channel 34, and also such that the shaft is moveable inside the channel 34 for facilitating the drilling of the machinable portion 31c of the object component 19. Upon energizing the shaft, the shaft is capable of providing a rotational force and a translational force, such that the drilling head 32c connected thereto can be used for reaming the inner surface of the object face, viz. 31c. A power source 38 is connected to the shaft for providing the rotational and translational forces required for energizing the shaft for drilling the machinable portion 31c for obtaining the aforementioned cooling bore 35. Thus, the cooling bore 35 is obtained in the region 22, and the cooling bore 35 is defined by its inner surfaces 33a-33c.

The shaft is also dimensioned such that the same is also connectable to the power source 38, which can be for example a chuck of a mechanical lathe. Furthermore, the shaft may also be dimensioned such that smooth movement of the shaft inside the channel 34 is made possible. For example, the dimensions of the shaft and the channel 34 can be so chosen such that a small gap 36 exists between the shaft and the channel 34, for the purpose of moving the shaft towards and away from the region 22 during the machining of the object component 19. Furthermore, the dimensions of the drilling head 32c (length and diameter) correspond to the dimensions of the cooling bore (depth and diameter) 35 that is required to be provided in the machinable portion 31c. Therewith, the object 39 of FIG 3a is obtained.

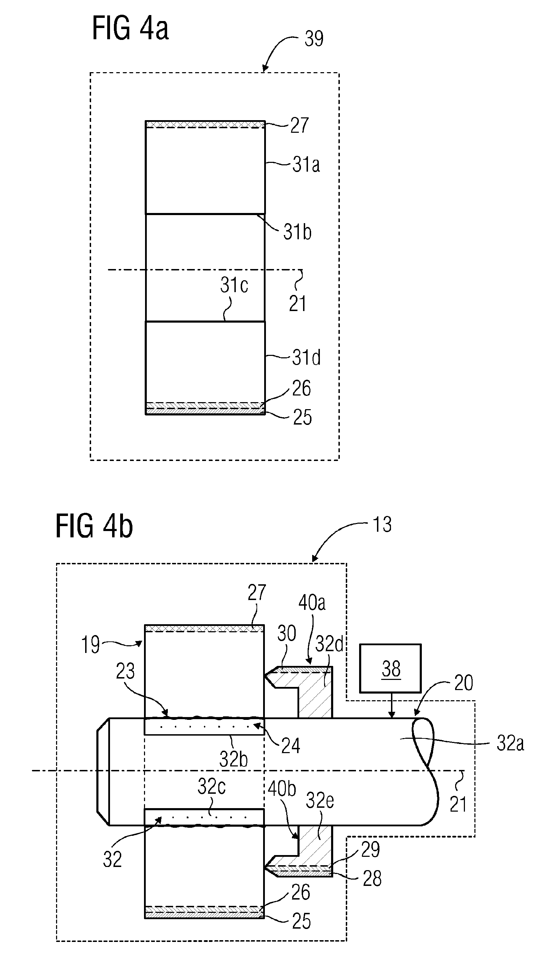

FIG 4a depicts a perspective view of another exemplary embodiment of another exemplary object 39 that is intended to be manufactured using the laser sintering device 1 and post machined based on the aforementioned teachings in accordance with the present invention.

Herein, the exemplary object 39 of FIG 4a can be construed to be a stator ring for a turbomachine (not depicted), wherein the stator ring comprises front faces, which are defined by two exemplary outer surfaces 31a, 31d and two exemplary inner surfaces 31b, 31c. However, for the exemplary object 39, the surface roughness of the inner surfaces 31b, 31c are intended to be higher than the surface roughness of the outer surfaces 31a, 31d, i.e. the inner surfaces 31b, 31c are required to be smoother as compared to the outer surfaces 31a, 31d for obtaining surfaces possessing the required surface roughness. The below paragraphs elucidate how the object 39 depicted in FIG 4a is obtained.

The object 39 of FIG 4a is manufactured by laser sintering an article 13 as depicted in FIG 4b. Firstly, the article 13 depicted in FIG 4b is manufactured such that the article 13 again comprises another customized object component 19 and another customized tool component 20, which are again jointly laser sintered using the laser sintering device 1, and the article 13 is laser sintered on the same target platform 14. Secondly, the object 39 (stator ring) depicted in FIG 4a is obtained by machining the object component 19 by the tool component 20 in accordance with the requirements set forth for the object 39.

The object component 19 depicted therein is laser sintered in the form of a ring such that the object component 19 comprises certain surfaces 31a-31d, some of which are to be construed as the aforementioned outer surfaces 31a, 31d, and others are to construed as the aforementioned inner surfaces 31b, 31c. However, in the article 13 obtained by laser sintering, the surface roughness values of all these surfaces 31a-31d of the object component 19 are initially equal in magnitude. Since the inner surfaces 31b, 31c are required to be smoother than the outer surfaces 31a, 31d, as set forth by the aforementioned requirement for the object 39 depicted in FIG 4a, this requirement is fulfilled by machining (by grinding) the inner surfaces 31b, 31c further by the tool component 20. Thus, in the present embodiment, the inner surfaces 31b, 31c are construed to be the aforementioned machinable portions constituting an object face 23 of the object component 19.

In order to grind the inner surfaces 31b, 31c further for the purpose of making the inner surfaces 31b, 31c smoother than the outer surfaces 31a, 31d, the tool component 20 of the article 13 is provided with a tool face 24 comprising certain machining portions 32b, 32c, which are laser sintered to provide means for grinding in the form of grinding portions. Another machining portion 32a is profiled in the shape of a shaft, and the grinding portions 32b, 32c are arranged on the shaft 32a, especially at those locations closer to inner surfaces 31b, 31c, such that the inner surfaces 31b, 31c are machinable by the grinding portions 32b, 32c upon the rotation of the shaft 32a. Certain machinable portions 32d, 32e act as guidance members 40a, 40b, and the guidance members 40a, 40b contact outer surfaces 31a, 31d of the object component 19. In the present embodiment, the guidance members 40a, 40b are integral to the tool component 20.

Herein, the shaft 32a is rotatable for effectuating rotations of the grinding portions 32b, 32c for grinding the inner surfaces 31b, 31c, and the guidance members 40a, 40b, which are in contact with the corresponding outer surfaces 31a, 31d of the object component 19, prevent the shaft 32a from slipping during the post machining process, i.e. the guidance members 40a, 40b prevent the slippage of the overall tool component 20.

In the article 13, the aforementioned grinding portions 32b, 32c are arranged such that the grinding portions 32b, 32c are in direct contact with the inner surfaces 31b, 31c, such that the grinding portions 32b, 32c upon energization can grind the inner surfaces 31b, 31c for further smoothening of the inner surfaces 31b, 31c. The grinding portions 32b, 32c constitute a tool face 24 of the tool component 20. It may be noted herein that the surface roughness of the grinding portions 32b, 32c are customised and defined based on the surface roughness required for the inner surfaces 31b, 31c, and the same can be laser sintered accordingly. This can be made possible by providing grinding portions 32b, 32c comprising customized grinding particles therein.

The shaft 32a is energized by connecting a power source 38, and the shaft 32a is rotated for grinding the inner surfaces 31b, 31c by the corresponding grinding portions 32b, 32c. Furthermore, the shaft 32a is profiled such that the shaft 32a is connectable to the power source 38, and also rotatable by the power source 38 upon energization of the shaft 32a. Herein, after the machining of the object component 19 by the tool component 20, i.e. upon the obtainment of smoother inner surfaces 31b, 31c as compared to the outer surfaces 31a, 31d, the shaft 32a is de-energized, and the tool component 20 is withdrawn. Thus, the object 39 depicted in FIG 4a, i.e. the stator ring 39 comprising smoother inner surfaces 31b, 31c - as compared to the outer surfaces 31a, 31d - is obtained.

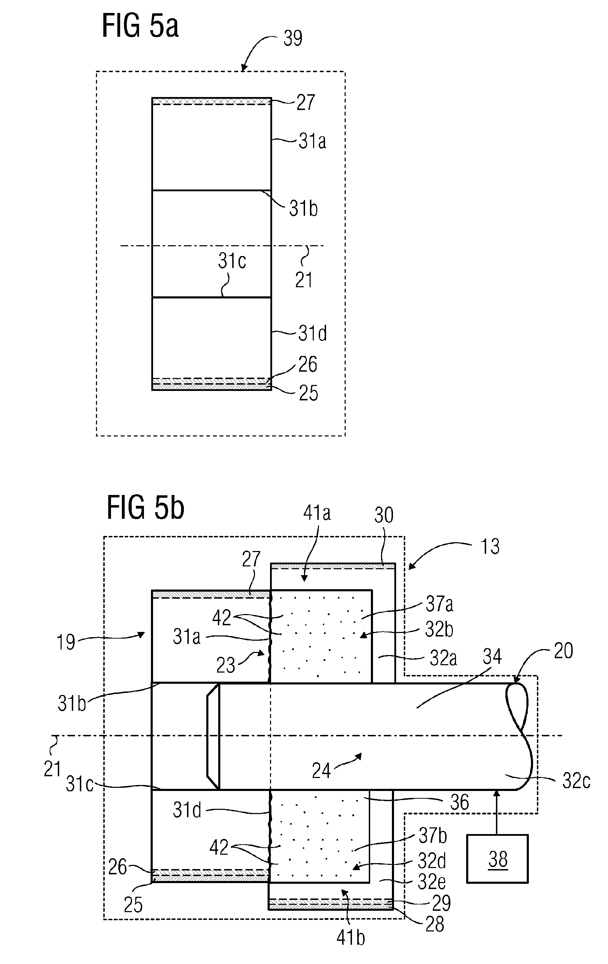

FIG 5a depicts a perspective view of yet another exemplary embodiment of yet another exemplary object 39 that is intended to be manufactured using the laser sintering device 1 and post machined based on the aforementioned teachings in accordance with the present invention.

Herein, the exemplary object 39 of FIG 5a can be construed to be a stator ring for a turbomachine (not depicted), wherein the stator ring comprises front faces, which are defined by two exemplary outer surfaces 31a, 31d and two exemplary inner surfaces 31b, 31c. However, for the exemplary object 39, the surface roughness of the outer surfaces 31a, 31d are intended to be higher than the surface roughness of the inner surfaces 31b, 31c, i.e. the outer surfaces 31a, 31d are required to be smoother as compared to the inner surfaces 31b, 31c for obtaining surfaces possessing the required surface roughness. The below paragraphs elucidate how the object 39 depicted in FIG 5a is obtained.

The object 39 of FIG 5a is manufactured by laser sintering an article 13 as depicted in FIG 5b. Firstly, the article 13 depicted in FIG 5b is manufactured such that the article 13 again comprises another customized object component 19 and another customized tool component 20, which are again jointly laser sintered using the laser sintering device 1, and the article 13 is laser sintered on the same target platform 14. Secondly, the object 39 (stator ring) depicted in FIG 5a is obtained by machining the object component 19 by the tool component 20 in accordance with the requirements set forth for the object 39.

The object component 19 depicted therein is laser sintered in the form of a ring such that the object component 19 comprises certain surfaces 31a-31d, some of which are to be construed as the aforementioned outer surfaces 31a, 31d, and others are to construed as the inner surfaces 31b, 31c. However, in the article 13 obtained by laser sintering, the surface roughness values of all these surfaces 31a-31d of the object component 19 are again initially equal in magnitude. Since the outer surfaces 31a, 31d are required to be smoother than the inner surfaces 31b, 31c, as set forth by the aforementioned requirement for the object 39 depicted in FIG 5a, this requirement is fulfilled by machining (by grinding) the outer surfaces 31a, 31d further by the tool component 20. Thus, in the present embodiment, the outer surfaces 31a, 31d are construed to be the aforementioned machinable portions constituting an object face 23 of the object component 19.

In order to grind outer surfaces 31a, 31d further for the purpose of making outer surfaces 31a, 31d smoother than the inner surfaces 31b, 31c, the tool component 20 of the article 13 is provided with a tool face 24 comprising machining portions 32a-32e. A machining portion 32c of the tool component 20 is profiled in the shape of a shaft, and other machining portions 32a, 32b, 32d, 32e are provided on the shaft 32c, especially at those locations closer to outer surfaces 31a, 31d, such that the outer surfaces 31a, 31d are machinable by the tool component 20.

Certain other machining portions 32a, 32e are profiled in the shape of receptacles 32a, 32e comprising lateral support members 41a, 41b. The support members 41a, 41b of the receptacles 32a, 32e extend towards the outer surfaces 31a, 31b and also contact the outer surfaces 31a, 31b. The support members 41a, 41b, the contacting regions between the support members 41a, 41b, the receptacles 32a, 32e, and the corresponding outer surfaces 31a, 31b of the object component 19 define respective chambers 37a, 37b. The chambers 37a, 37b are provided with customized grinding particles 42, wherewith the chambers 37a, 37b, and the corresponding grinding particles 42 contained therein form the corresponding machining portions 32b, 32d that serve as customized grinding particle portions and thereby serving as means for grinding the outer surfaces 31a, 31b. The grinding particle portions 32b, 32d contact the respective outer surfaces 31a, 31b.

It may be noted herein that the grinding particle portions 32b, 32d are arranged to contact with the shaft 32c, and the grinding particle portions 32b are further arranged to directly contact the outer surfaces 31a, 31d. Herein, the shaft 32c is rotatable for effectuating rotations of the grinding particle portions 32b, 32d for grinding the outer surfaces 31a, 31d. The grinding particle portions 32b, 32d upon energization can grind the outer surfaces 31a, 31d for further smoothening of the outer surfaces 31a, 31d. The grinding particle portions 32b, 32d constitute a tool face 24 of the tool component 20. It may be noted herein that the surface roughness of the grinding particle portions 32b, 32d are customised and defined based on the surface roughness required for the outer surfaces 31a, 31d, and the same can be laser sintered accordingly. This can be made possible by providing the grinding particle portions 32b, 32d comprising the aforementioned customized grinding particles 42 therein.

The support members 41a, 41b support the tool component 20 during the rotation of the tool component and prevent the spillage of the customized grinding particles 42 from the respective chambers 37a, 37b. Furthermore, the support members 41a, 41b are configured such that the entire extent of the corresponding outer surfaces 31a, 31d are capable of being grinded during the grinding operation executed by the tool component 20. In the present embodiment, the support members 41a, 41b are integral to the tool component 20.

The shaft 32c is energized by connecting a power source 38, and the shaft 32c is rotated for grinding the outer surfaces 31a, 31b by the grinding particle portions 32b. Furthermore, the shaft 32c is profiled such that the shaft 32c is connectable to the power source 38, and also rotatable by the power source 38 upon energization of the shaft 32c. Herein, after the machining of the object component 19 by the tool component 20, i.e. upon the obtainment of smoother outer surfaces 31a, 31d as compared to the inner surfaces 31b, 31c, the shaft 32c is de-energized, and the tool component 20 is withdrawn. Thus, the object 39 depicted in FIG 5a, i.e. the stator ring 39 comprising smoother outer surfaces 31a, 31d - as compared to the inner surfaces 31b, 31c - is obtained.

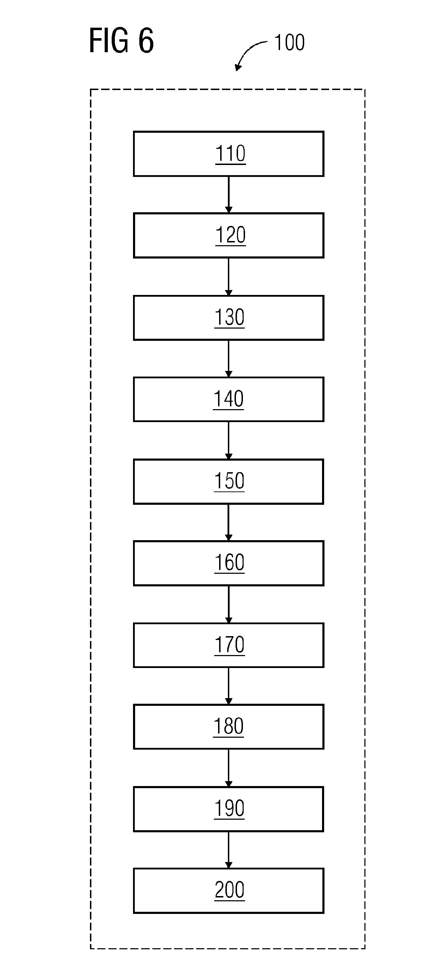

An exemplary method 100 for manufacturing the aforementioned object 39 according to one or more embodiments of the present invention is depicted in FIG 6.

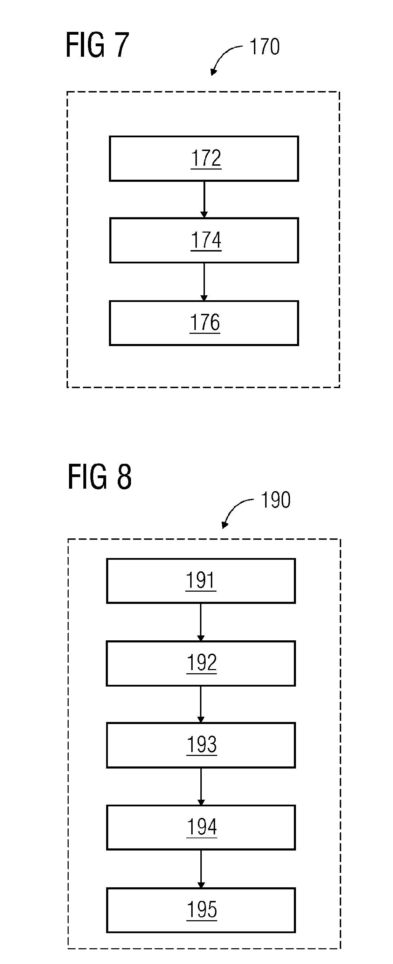

FIG 6 elucidates the overall method 100, and sub-steps of certain steps of the method 100 are also elucidated and depicted with reference to FIG 7 and FIG 8. Herein, cross-references are also made to the preceding figures for the purpose of explanation of FIG 6 until FIG 8.

It may be noted herein that in the following paragraphs, the various steps of the method 100 related to manufacturing the aforementioned object 39 is summarized and is not elucidated in great detail, because the techniques of manufacturing the aforementioned object 39 are already elucidated in great detail with respect to the laser sintering device 1 and the exemplary desired objects 39 in the preceding paragraphs. The method 100 can be implemented using a commercially available processing device, such as but not limited to a general purpose computer, Application Specific Integrated Circuit, a Field Programmable Gate Device (FPGA), a microprocessor, et cetera.

In step 110, a predefined 3D object profile (not depicted) of the intended object 39 is received. The 3D object profile is usually created by a user (not depicted), and the same can be planned and created using commercially available 3D modeling tools such as AutoCAD, SolidWorks, CATIA, et cetera. The 3D object profile signifies the shape, profile, surface features, dimensions, et cetera of the intended object 39.

In step 120, the 3D object profile is analysed for the purpose of determining a 3D object component profile (not depicted) for the purpose of defining and obtaining a 3D model of the object component 19 that is to be laser sintered. Herein, the different features which are to be comprised in the intended object 39 are considered and the correspondingly appropriate machinable portions 31a-31e of the object component 19 are determined, i.e. the appropriate object face 23 for the object component 19 is determined.

Thereafter, in step 130, a 3D tool component profile (not depicted) for the tool component 20 is determined. The different machining portions 32a-32e comprised in the 3D tool component profile for the tool component 20 are defined, and the machining portions 32a-32e are purported to facilitate the machining the machinable portions 31a-31e of the object component 19. In step 130, the appropriate tool face 24 for the tool component 20 is determined.

Thereafter, in step 140, a 3D article profile (not depicted) is obtained by integrating the aforementioned 3D object component profile and the aforementioned 3D tool component profile. The 3D article profile defines a profile of the article 13 that is to be laser sintered using the laser sintering device 1, such that the object component 19 and the tool component 20 are comprised in the article 13.

It may be noted herein that creation of the 3D object component profile, creation of the 3D tool component profile, and integration of the 3D object component profile and the 3D tool component profile for obtainment of the 3D article profile, et cetera, can also be performed by the user by means of the aforesaid 3D modeling tools. Furthermore, the 3D object component profile, the 3D tool component profile, and the 3D article profile, are stored and processed as stereo-lithographic files, which can be provided to the laser sintering device 1 for the purpose of laser sintering the article 13.

Thereafter, the 3D article profile is sliced into 2D cross-sectional profiles, wherein each of the 2D cross-sectional profiles purports to a cross-section of a certain layer of the article 13 that is to be laser sintered by the laser sintering device 1. The 2D cross-sectional layer profiles are also stereo-lithographic files and each of the 2D cross-sectional profile defines that particular layer of the article 13, such as the first sintered layer 16, the second sintered layer 17, the intermediate layers, or the topmost sintered layer 18, et cetera. The 2D article layer profiles are provided to the laser sintering controller 2 for the purpose of additive manufacturing of the aforementioned article 13 in a layered manner.

In step 170, the article 13 is laser sintered. The laser sintering controller 2 of the laser sintering device 1 receives the aforementioned 2D cross-sectional profiles representing the article 13 and the laser sintering controller 2 enables the performance of a series of actions required for the purpose of laser sintering the article 13.

Reference is herein made to FIG 7, which depicts a plurality of sub-steps of the step 170, viz. steps 172, 174, and 176, which purport to the series of actions performed by the laser sintering controller 2 for laser sintering the article 13.

In step 172, a first layer of the powdered material 5 is disposed on the target platform 14, and in a subsequent step 174, the first layer of the powdered material 5 is laser sintered in accordance with a 2D cross-sectional profile, which corresponds to the first layer of the article 13, in order to obtain the first sintered layer 16 of the article 13. Thereafter, in a subsequent step 176, the target platform 14 is lowered by a predefined magnitude, which is usually equivalent to the thickness of the first sintered layer 16. Thereafter, the aforementioned steps, viz. 172, 174, and 176 are repeated accordingly for disposing a second powdered layer on top of the first sintered layer 16, laser sintering the second powdered layer for obtaining the second sintered layer 17 of the article 13, and again lowering the target platform 14.

Referring back to FIG 6, in step 180, it is determined whether the presently sintered layer of the article 13 is the topmost sintered layer 18 of the article 13. Else, the aforementioned steps 172, 174, and 176 are repeated until the topmost sintered layer 18 of the article 13 is obtained, therewith concluding the manufacturing of the article 13. The article 13 may now be removed from the target platform 14 for the purpose of carrying out further machining steps for the purpose of obtaining the intended object 39 from the manufactured article 13.

In step 190, the object component 19 comprised in the article 13 is machined, and the machining of the article 13 comprises a plurality of sub-steps.

Reference is herein made to FIG 8, which depicts a plurality of sub-steps of the step 190, viz. steps 191-195, which purport to the series of actions performed for the purpose of obtaining the object 39 from the sintered article 13.

In step 191, the article 13 is removed from the target platform 14, for example by cutting away the article 13 from the target platform 14, especially by making a lateral cut at the first sintered layer 16 of the article 13. In a subsequent step 192, the power source 38 is connected to the tool component 20 comprised in the article 13. The tool component 20 is profiled such that the tool component 20 is mechanically connectable to the power source 38. The power source 38 energizes the tool component 20 for providing the forces (rotational, translational, et cetera) for performing the machining operations on the object component 19. In step 193, the laser sintering controller 2 controls the machining operations of the energized tool component 20 in accordance with the 3D object profile. Herein, in step 194, a present profile of the object component 19 is compared with the 3D object profile, and if the present profile of the object component 19 matches the 3D object profile, in step 195, the machining of the object component 19 is stopped, and the intended object 39 is construed to be obtained.

Referring back to FIG 6, in a concluding step 200, the object 39 is separated from the tool component 20, and the object 39 is now ready to be used in any suitable application.

Though the invention has been described with reference to specific embodiments, this description is not meant to be construed in a limiting sense. Various examples of the disclosed embodiments, as well as alternate embodiments of the invention, will become apparent to persons skilled in the art upon reference to the description of the invention. It is therefore contemplated that such modifications can be made without departing from the embodiments of the present invention as defined.

## Claims

1. A method (100) for manufacturing an object (39), the method (100) comprising steps of:
- (170) laser sintering an object component (19) and a tool component (20), wherein the tool component (20) is laser sintered such that the tool component (20) is adapted for post machining the object component (19), and
- (190) machining the object component (19) by the tool component (20) for obtaining the object (39).

2. The method (100) according to claim 1,
wherein the object component (19) and the tool component (20) are laser sintered in a single laser sintering process.

3. The method (100) according to claim 1 or claim 2,
wherein the object component (19) and the tool component (20) are laser sintered on a same target platform (14).

4. The method (100) according to any of the claims 1 to 3,
wherein in the step (170) of laser sintering the object component (19) and the tool component (20), an object face (23) is provided for the object component (19), and a tool face (24) is provided for the tool component (20), and wherein a shape of the object face (23) is complementary to a shape of the tool face (24).

5. The method (100) according to claim 4,
wherein the object face (23) and the tool face (24) are provided such that the tool face (24) is in contact with the object face (23).

6. The method (100) according to any of the claims 1 to 5,
wherein in the step (170) of laser sintering the object component (19) and the tool component (20), a guidance member (35) is provided for guiding the tool component (20) for post machining the object component (19).

7. The method (100) according to claim 6,
wherein the guidance member (35) is integral to the tool component (20).

8. The method (100) according to any of the claims 1 to 7,
wherein in the step (170) of laser sintering the object component (19) and the tool component (20), a support member (29) is provided for supporting the tool component (20) for post machining the object component (19).

9. The method (100) according to claim 8,
wherein the support member (29) is integral to the tool component (20).

10. The method (100) according to any of the claims 1 to 9,
wherein the tool component (20) is laser sintered such that the tool component (20) is adapted for connecting a power source (37) to the tool component (20).

11. A laser sintering device (1) for performing the method (100) according to any of the claims 1 to 10.
